(19) Europäisches Patentamt

European Patent Office

Office européen des brevets

(11) **EP 0 931 017 B1**

(12) **EUROPÄISCHE PATENTSCHRIFT**

(45) Veröffentlichungstag und Bekanntmachung des Hinweises auf die Patenterteilung:
**09.07.2003 Patentblatt 2003/28**

(21) Anmeldenummer: **97910242.3**

(22) Anmeldetag: **27.09.1997**

(51) Int Cl.[7]: **C01B 33/26**, B01J 21/12

(86) Internationale Anmeldenummer:
**PCT/DE97/02251**

(87) Internationale Veröffentlichungsnummer:
**WO 98/015498 (16.04.1998 Gazette 1998/15)**

(54) **VERFAHREN ZUR HERSTELLUNG UND DISPERGIEREN VON ALUMOSILIKATEN**

METHOD FOR PRODUCING AND DISPERSING ALUMINIUM SILICATES

MODE DE FABRICATION ET DE DISPERSION DE SILICATES D'ALUMINIUM

(84) Benannte Vertragsstaaten:
**BE DE DK ES FR GB IT NL**

(30) Priorität: **05.10.1996 DE 19641142**

(43) Veröffentlichungstag der Anmeldung:
**28.07.1999 Patentblatt 1999/30**

(73) Patentinhaber: **SASOL Germany GmbH**
**22297 Hamburg (DE)**

(72) Erfinder:
• **BRASCH, Andrea**
**D-25704 Meldorf (DE)**

• **DIBLITZ, Klaus**
**D-22869 Hamburg (DE)**
• **MEYER, Arnold**
**D-25693 St. Michaelisdonn (DE)**

(74) Vertreter: **Schupfner, Gerhard D., Dr. Dipl.-Chem.**
**Müller, Schupfner & Gauger,**
**Patentanwälte,**
**Postfach 1753**
**21236 Buchholz (DE)**

(56) Entgegenhaltungen:
EP-A- 0 583 783        EP-A- 0 669 162
WO-A-94/26791        FR-A- 2 243 020
FR-A- 2 527 196        FR-A- 2 639 256

## Beschreibung

Die Erfindung betrifft ein Verfahren zur Herstellung und Dispergieren von in wäßrigen oder in wäßrig-sauren Medien dispergierbaren Alumosilikaten von hoher Reinheit durch Hydrolyse von Aluminiumverbindungen und Organo-Siliziumverbindungen.

Alumosilikate kommen in großer Zahl in den unterschiedlichsten Modifikationen in der Natur vor. Darunter gibt es zahlreiche Verbindungen mit definierten kristallinen Strukturen wie z.B. Muskovit, Nephelin oder Chabasit. Ersetzt man in der Raumnetzstrukur von Silikaten die Siliciumatome teilweise durch Aluminiumatome unter Erhalt der Raumnetzstruktur nennt man solche Verbindungen Zeolithe.

Neben natürlichen Vorkommen existiert eine Reihe synthetisch hergestellter Alumosilikate. Diese können ebenfalls kristallchemisch definiert sein, es kann sich aber auch um physikalische Mischungen von Aluminiumhydroxid und Kieselsäuren in unterschiedlich wasserreicher Form handeln. Ebenfalls ist es möglich, daß neben dem Vorliegen von physikalischen Mischungen gleichzeitig auch kristallchemisch definiertes Alumosilikat vorliegt.

Ein übliches Herstellverfahren für solche Alumosilikate ist die Umsetzung von Tonen wie Kaolin mit Kieselsäure und Natriumhydroxid. Ein weiterer Syntheseweg ist die Cogelierung von Aluminiumhydroxidsolen mit Kieselsäuresolen und nachfolgender Ausfällung [GB 2166971-C]. Ebenfalls ist die Ausfällung eines Aluminiumsalzes in einem Kieselsäuresol bekannt [CA 848966-A].

Die oben beschriebenen Verfahren haben den Nachteil, daß die gewünschten Sole oder Dispersionen nur nach der Herstellung vorliegen, ein nachfolgend getrocknetes Pulver jedoch nur unzureichend oder unter Verwendung von Lösemittelgemischen in den dispergierten Zustand zu bringen ist. Nachteilig ist ebenfalls, daß die so erhaltenen Sole oder Dispersionen einen hohen Gehalt an Alkali- oder Erdalkalimetallen enthalten, da diese Metalle zur Stabilisierung der Kieselsäure eingesetzt werden. Die nachfolgende Reinigung durch z.B. Ionenaustausch gelingt nur unvollständig, so daß etwa typische Gehalte an Alkali- oder Erdalkalimetallen nach erfolgter Reinigung bei 0,1 % (= 1000 ppm) liegt (US 3933621). In der heterogenen Katalyse werden hochreine Katalysatorträger gefordert; deren Alkali- oder Erdalkalimetallgehalt unter 100 ppm liegt, vor allem sollte der Natriumoxidgehalt kleiner als 50 ppm sein. Zur Herstellung solch hochreiner Alumosilikate beschreibt das deutsche Patent DE 38 39 580-C1 einen Weg mittels ionenausgetauschter Orthokieselsäure. Die so hergestellten Alumosilikate besitzen die gewünschte hohe Reinheit, sie sind jedoch nicht dispergierbar.

Aus der WO 94/26791 ist eine Verfahren zur partiellen Hydrolyse von Siliziumalkoholaten in Alkoholen, Reifen der teilhydrolysierten Siliziumalkoholate und Zugabe einer Aluminiumverbindung in einer sauren Lösung mit nachfolgender Zugabe eines Geliermittels und Reifen bei Raumtemperatur bis Siedetemperatur des Mediums im Basischen bekannt. Die nach dem Verfahren der WO 94/26791 zugänglichen Aluminosilikate sind in wässrigen Lösungen nach Trocknung nicht dauerhaft dispergierbar.

Alumosilikate sind mit Aluminiumhydroxiden physikalisch/chemisch nicht vergleichbar. Sie besitzen z.B. eine stärkere Acidität der Oberfläche wegen des stärker Lewis-sauren Charakters der Kieselsäure. Diese Eigenschaft wird für eine Vielzahl von katalytischen Prozessen wie der Entschwefelung, Denitrifizierung, Oxidation, dem Hydrocracken und dem mildem Hydrocracken genutzt.

Moderne Katalysatoren bestehen oft aus einer Vielzahl unterschiedlicher Trägermaterialien (siehe z.B. GB 2166971-C). Es liegt auf der Hand, daß eine möglichst homogene Durchmischung solcher Trägermaterialien bei der Herstellung angestrebt wird, um einheitliche Kompositionen dieser Katalysatorträger zu gewährleisten. Aus diesem Grund ist ein dispergierbares Alumosilikat vorteilhaft. Diese Eigenschaft ist ebenfalls vorteilhaft für die Aufbringung einer Schicht eines solchen dispergierbaren Alumosilikates auf Substraten. Diese Technik kann im Bereich der Katalyse ebenso wie in der Beschichtung von Werkstoffen angewandt werden. Aus den obengenannten Ausführungen ergibt sich der Bedarf nach hochreinen dispergierbaren Alumosilikaten.

Der Erfindung lag die Aufgabe zugrunde, eine Synthese von dispergierbaren Alumosilikaten zu entwickeln, welche die nachfolgenden Vorteile besitzt:

- Die erfindungsgemäß hergestellten Alumosilikate sollen auch nach Trocknung und Konfektionierung in Pulverform in wäßrigen Lösungen ohne Zusatz oder Behandlung mit organischen Lösungsmitteln in wäßrigen Medien dispergierbar sein.
- Die erfindungsgemäß hergestellten Alumosilikate sollen eine hohe Reinheit besitzen.
- Die zur Herstellung dieser Verbindungen eingesetzten Ausgangsstoffe sollen leicht verfügbar sein.
- Durch Steuerung des Edukt-Verhältnisses sollen das Si/Al-Verhältnis des Produktes einstellbar sein, ohne daß eine Komponente im Überschuß eingesetzt werden muß.
- Der Preis der Ausgangsstoffe soll ein wirtschaftliches Verfahren ermöglichen.
- Der Herstellungsprozeß soll kontinuierlich und diskontinuierlich möglich sein.

Überraschenderweise wurde nun gefunden, daß durch das nachstehend beschriebene Verfahren Alumosilikate zugänglich sind, die die der Erfindung zugrunde liegenden Aufgaben lösen.

Die vorliegende Erfindung besteht in einem Verfahren zur kontinuierlichen oder diskontinuierlichen Herstellung und Dispergieren von in wäßrigen und/oder wäßrig-sauren Medien dispergierbaren Alumosilikaten mit hoher Reinheit gemäß Anspruch 1.

Die Hydrolyse der Komponenten

(A) eine oder mehrere hydrolysierbare Aluminiumverbindung(en) und
(B) eine oder mehrere hydrolysierbare Organo-Siliciumverbindung(en)

erfolgt gemeinsam, kann aber auch teilweise zeitlich nacheinander oder zunächst räumlich von einander getrenat erfolgen. In letzerem Fall werden die Umsetzungs- oder Teilumsetzungsprodukte nach der Hydrolyse/Teilhydrolyse vereinigt

Die hydrolysierbare Verbindung im Sinne dieser Erfindung sind alle Aluminiumverbindungen oder Organo-Siliciumverbindungen die bei Umsetzung mit Wasser M-OH und/oder M-O-M Stukturen ausbilden. Exemplarisch seien für die Organo-Siliciumverbindungen Silikone, Alkylsilane, Alkylalkoxysilane, Alkylhalogensilane, Alkoxyhydroxysilane oder Alkylhydroxysilane und für die Aluminiumverbindungen Aluminiumalkoholate, Aluminiumhydroxyalkoholate, Aluminiumoxyalkoholate, Aluminiumacetylacetonate, Aluminiumalkylchloride oder Aluminiumcarboxylate genannt. Die Hydrolyse erfolgt bei 50 bis 98°C, besonders bevorzugt bei 85 bis 98°C.

Bevorzugt aber werden Verbindungen des Typs $M(O-R-A-R')_{z-n} (O-R'')_n$ eingesetzt, wobei jeweils unabhängig voneinander und ggf. für jeden Rest unterschiedlich

M   Aluminium oder Silizium ist,
R''   ein verzweigter oder unverzweigter, cyclischer oder acyclischer oder aromatischer Kohlenwasserstoffrest mit 1 bis 30, insbesondere 2 bis 12 Kohlenstoffatomen ist,
R'   ein verzweigter oder unverzweigter, cyclischer oder acyclischer oder aromatischer Kohlenwasserstoffrest mit 1 bis 10 Kohlenstoffatomen ist, insbesondere ein Alkylrest mit 4 - 8 Kohlenstoffatomen,
R   ein zweiwertiger und verzweigter oder unverzweigter, cyclischer oder acyclischer oder aromatischer C1- bis C10-Kohlenwasserstoffrest ist, insbesondere ein Alkylrest mit 1 - 5 Kohlenstoffatomen, insbesondere bevorzugt mit 1 bis 3 Kohlenstoffatomen., wobei dieser besonders bevorzugt unverzweigt und acyclisch ist,
A   für ein Heteroatom aus der Hauptgruppe 6 (Sauerstoff-Gruppe) oder Hauptgruppe 5 (Stickstoff-Gruppe) des Periodensystems, bevorzugt für Sauerstoff oder Stickstoff selbst steht, wobei wenn A für ein Element der Hauptgruppe 5 steht trägt A zur Absättigung seiner Valenzen als weitere Substituenten Wasserstoff, oder einen C1- bis C10- Alkyl- oder einen C6- bis C10- Aryl/Alkylarylrest und
n   ein Index für die Zahlen 0, 1, 2 oder 3 ist, wenn M Aluminium ist, oder ein Index für die Zahlen 0, 1, 2 , 3 oder 4 ist, wenn M Silicium ist.
z   ein Index für die Zahl 3 ist, wenn M Aluminium ist, oder ein Index für die Zahl 4 ist, wenn M Silicium ist.

Bevorzugt ist n gleich 0 oder n gleich 3, wenn M Aluminium ist. Wenn M Silicium ist, ist n bevorzugt gleich 4 Für n gleich 0 und A gleich Sauerstoff sind Metalltrisbutylenglykolate bevorzugt. Vorzugsweise steht M für Aluminium.

Für n gleich 3 sind die Aluminium-Verbindungen Aluminiumtrisalkoholate. Diese tragen mit steigender Präferenz C2- bis C12-, C4- bis C8-, oder C6- bis C8- Kohlenwasserstoffreste, wobei die Reste gesättigt oder ungesättigt, cyclisch oder acyclisch, verzweigt oder unverzweigt oder aromatisch, bevorzugt aber gesättigt sind. Besonders bevorzugt sind lineare gesättige C6- bis C8- Kohlenwasserstoffreste. Hydrolysierbare Aluminiumalkoholate können z.B. nach dem Verfahren der EP-0 111 115-A1 hergestellt werden.

Für n gleich 4 sind die hydrolysierbaren Organo-Siliciumverbindungen Siliciumalkoholate Bevorzugt Siliciumalkoholate tragen C1- bis C8- Kohlenwasserstoffreste, wobei die Reste gesättigt oder ungesättigt, cyclisch oder acyclisch, verzweigt oder unverzweigt oder aromatisch, besonders bevorzugt sind gesättigte C2- bis C4- Kohlenwasserstoffreste.

Das erfindungsgemäße Verfahren zeichnet sich weiterhin dadurch aus, daß abgesehen von den Edukten bzw. Produkten frei von organischen Lösungsmitteln und im wesentlichen in wäßriger oder alkoholisch / wäßriger Umgebung umgesetzt werden kann.

In einer Variante des Verfahrens werden die hydrolysierbaren Organo-Siliciumverbindungen mit einer unterstöchiometrischen Menge von 0,5 bis 3 Mol, bevorzugt 1 bis 2 Mol, Wasser pro Mol Silicium vor Zugabe der hydrolysierbaren oder hydrolisierten Aluminiumverbindung vorhydrolysiert bzw. partiell hydrolisiert. Diese Vorhydrolyse findet bevorzugt immer dann Anwendung, wenn als hydrolisierbare Aluminiumverbindungen keine Verbindungen des Typs $Al(O-R-A-R')_{3-n}(O-R'')_3$ eingesetzt werden.

Die hydrolysierbaren Metallverbindungen können zuvor durch Destillation, Filtration Ionenaustausch und/oder Zentrifugation gereinigt werden.

Die Dispergierbarkeit verbessert sich um einige Prozentpunkte, wenn die vereinigten Umsetzungsprodukte von Silicium- und Aluminium-Verbindung gemeinsam einer hydrothermalen Behandlung in wäßriger Umgebung bei Temperaturen von 40 bis 220 °C über einen Zeitraum von größer 0,5 h während oder nach der Hydrolyse unterzogen werden. In einer weiteren Ausgestaltung des Verfahrens wird diese hydrothermale Alterung über einen Zeitraum von 0,5 h bis 24 h durchgeführt. Als bevorzugt hat sich eine Dauer von 1 h bis 20 h, besonders bevorzugt von 5 h bis 20 h und eine Temperatur von 80 - 130 °C erwiesen.

Während der hydrothermalen Behandlung ist eine Säure anwesend. Diese Säure ist bevorzugt eine einwertige organische C1- bis C6- Säure oder eine einwertige anorganische Säure (/ eine einwertige Mineralsäure) wie HCl oder $HNO_3$. Die Säure kann auch nach der Hydrolyse zugegeben werden, sollte aber vor der Trocknung zugegeben werden und während der hydrothermalen Behandlung zugegen sein. Die Säuremenge beträgt 0,1 bis 2,0 g, bezogen auf ein 1 g eingesetzten Feststoff, bevorzugt sind 0,2 bis 0,8 g Säure.

Einwertige organische C1- bis C6- Säuren im Sinne der Erfindung sind organische Verbindungen, die zumindest 1 bis 6 Kohlenstoffatome enthalten und in Gegenwart von Wasser sauer, d.h. als Protonenspender, reagieren und bezogen auf das Säuremolekül lediglich ein Proton freigeben können.. Eingeschlossen in diese Definition sind zum Beispiel Säurechloride, Sulfonsäuren und andere organische Verbindungen, die in Wasser -COOH bzw. -COO⁻ Gruppen ausbilden.

Die Edukte werden in einem Verhältnis von 99,5 Gew% zu 0,5 Gew% bis 50 Gew% zu 50 Gew% eingesetzt, vorzugsweise von 98 Gew% zu 2 Gew% bis 50 Gew% zu 50 Gew%, jeweils bezogen auf $Al_2O_3$ zu $SiO_2$. Zur besseren Abtrennung der organischen Phase können Basen wie Ammoniaklösung nach der Hydrolyse zugegeben werden. Das erfindungsgemäße Produkt der Umsetzung kann weiterhin bei Temperaturen zwischen 550 °C und 1500 °C für 0,5 bis 24 h kalziniert werden.

Die dispergierbaren Alumosilikate können als Katalysator, als Katalysatorträger für katalytische Prozesse und zur Herstellung derselben, als Ausgangsmaterial für keramische Werkstoffe, als Beschichtungsmaterial, als Binderkomponente und als Rheologiemodifikatoren in wässrigen Systemen verwendet werden.

Unter dem Begriff "dispergierbare Alumosilikate" im Sinne der Erfindung versteht man solche Alumosilikate welche sich ausgehend von der trockenen, zweckmäßigerweise pulverförmigen Form zumindest zu größer 90 Gew. %, besser zu größer 95 Gew.%, in wäßrigen Medien dispergieren lassen. Das heißt zu größer 90 Gew.%, besser zu größer 95 Gew.% nach dem Dispergieren im dispergierten Zustand verbleiben. Zum Quantifizieren der Dispergierbarkeit wird auf die im experimentellen Teil beschriebene Methode verwiesen. Zur Trocknung der erhaltenen wäßrigen Produkte können die üblichen Verfahren wie Sprühtrocknung oder Trommeltrocknung angewandt werden. Das Verfahren zur Herstellung der dispergierbaren Alumosilikate kann kontinuierlich und diskontinuierlich durchgeführt werden.

Zur Dispergierung der erfindungsgemäßen Alumosilikate können in Wasser verdünnte Säuren verwandt werden. Diese können anorganische Säuren wie Salzsäure, Salpetersäure oder C1- bis C6-organische Säuren sein, bevorzugt sind einwertige Säuren. Die Konzentration der zum Dispergieren zu verwendenden Säure kann von 0,1 %-. bis 40 Gew% (bezogen auf die reine Säure) reichen. Bevorzugt sind aber geringere Mengen etwa 0,1 bis 5 Gew%. In einigen Fällen kann zur Dispergierung lediglich Wasser verwandt werden.

Die erfindungsgemäß hergestellten Verbindungen lassen sich Kalzinieren. Zum Kalzinieren wurden die erfindungsgemäßen Verbindungen in einen Ofen bei Temperaturen zwischen 550 °C und 1500 °C über einen Zeitraum von 3 h bis 24 h verbracht. Das so hergestellte Metalloxid weist ebenfalls die geforderte hohe Reinheit auf.

Die folgende Tabelle 1 zeigt erfindungsgemäß hergestellte Alumosilikate, sowie deren Dispergierbarkeit D.

Tabelle 1

| Verbindung | $Al_2O_3 : SiO_2$ [Gew%] | $HNO_3$* [Gew%] | Alterung [h bei °C] | Dispergierbarkeit D [%] |
|---|---|---|---|---|
| 1 | 72,3 : 27,7 | 30,0 | - | 96 |
| 2 | 61,5 : 38,5 | 25,0 | - | 96 |
| 3 | 72,3 : 27,7 | 2,0 | 16 h / 95°C | 97 |
| 4 | 51,6 : 48,4 | 30,0 | - | 95 |
| 5 | 95,0 : 5,0 | 0,8 | 16 h / 95°C | 97 |
| 6 | 74,1 : 25,9 | 30 | - | 98 |
| A | 95,1 : 4,9 | 30 | - | nicht dispergierbar |
| B | 50,4 : 49,6 | 30 | - | nicht dispergierbar |
| C | 68,8 : 31,2 | 30 | 5 h / 95 °C | nicht dispergierbar |

*Legende: Verbindung A und B sind konventionell hergestellte Alumosilikate, C ist ein aus Kieselsäure und Aluminiumalkoholaten mit hydrothermaler Behandlung jedoch ohne Säurezusatz hergestelltes Alumosilikat, A bis C sind Vergleichsubstanzen, es sind jeweils 10 Gew% Feststoff Alumosilikat dispergiert worden, * Dispergiersäure.*

Tabelle 2 gibt die physikalischen Daten der erfindungsgemäßen Alumosilikate im Vergleich zu zwei Standard-Alumosilikaten A und B wieder. Die als Vergleichssubstanzen dienenden Alumosilikate A und B sind durch Vermischen einer Tonerdedispersion mit Kieselsäure hergestellt.

Tabelle 2

| Verbindung | $Al_2O_3$ : $SiO_2$ [Gew.%] | Oberfläche [$m^2$/g] | Porenvolumen [ml/g] |
|---|---|---|---|
| 1 | 72,3 : 27,7 | 426 | 0,41 |
| 2 | 61,5 : 38,5 | 406 | 0,35 |
| 3 | 72,3 : 27,7 | 315 | 0,22 |
| 4 | 51,6 : 48,4 | 303 | 0,31 |
| 5 | 95,0 : 5,0 | 527 | 0,73 |
| 6 | 74,1 : 25,9 | 500 | 0,62 |
| A | 95,1 : 4,9 | 314 | 0,54 |
| B | 50,4 : 49,6 | 452 | 0,60 |

Die erfindungsgemäß hergestellten dispergierbaren Alumosilikate besitzen eine hohe Reinheit. Insbesondere sind die für die Anwendung in der Katalyse besonders nachteiligen Alkali- und Erdalkimetallgehalte sehr gering. In Tabelle 3 sind die Ergebnisse der Spurenelementbestimmung mittels ICP dargelegt. Eine weitere Erhöhung der Reinheit gegenüber den Werten aus Tabelle 3 kann durch Verwendung von bidestilliertem

Wasser und Gefäßen aus inertem Material erzielt werden.

Tabelle 3

| Verbindung | $Na_2O$ [PPM] | $Li_2O$ [PPM] | MgO [PPM] | CaO [PPM] | $TiO_2$ [PPM] | $Fe_2O_3$ [PPM] |
|---|---|---|---|---|---|---|
| 1 | 13 | <5 | <10 | <10 | <50 | 12 |
| 2 | <10 | <5 | <10 | <10 | <50 | 48 |
| 4 | 16 | <5 | <10 | <10 | <50 | 63 |
| 5 | <10 | <5 | <10 | <10 | <50 | 28 |
| 6 | 12 | <5 | <10 | <10 | <50 | 35 |
| *Legende: Die Summe anderer Elemente wie Pb, Zn, Ni, Cr, Cu, Mn, Mo und Ga beträgt kleiner 50 PPM* | | | | | | |

**Beispiele** (allgemein)

Zur Analyse der erfindungsgemäß hergestellten Verbindungen wurden die Verunreinigungen durch Spurenelemente mittels induktiv gekoppelter Plasmaspektroskopie bestimmt. Oberflächen wurden mittels BET (3-Punkt Methode) ermittelt, Porenvolumina zusätzlich mittels Quecksilberporosimetrie (Porosimeter Autopore II 9220, Mikromeritics), sowie mittels Stickstoffporosimetrie (Flow Prep 060, Gemini 2360, 2375 Mikromeritics). Zum Kalzinieren wurden die erfindungsgemäßen Verbindungen in einem Muffelofen Temperaturen zwischen 550 °C und 1500 °C ausgesetzt. Zur Hydrolyse wurde deionisiertes Wasser verwendet.

Zur Bestimmung der Dispergierbarkeit D wurde folgende Methode angewandt. Eine Menge des trockenen Feststoffes wird mit einer verdünnten Säure, etwa Salpetersäure, in einem Becherglas aufgerührt. Danach wird mit einem Rührer 10 Min. gerührt (800-850 upm) und die Aufschlämmung quantitativ in Zentrifugengläser überführt. Man zentrifugiert 20 Min. bei 2400 Umin$^{-1}$ und gießt dann die überstehende Lösung ab und trocknet den verbleibenden Rückstand im Zentrifugenglas mindestens 0,5 Std. bei 573 K (300°C). Das Zentrifugenglas wird mit und anschließend ohne Rückstand gewogen. Aus der Differenz erhält man die Auswaage des nicht dispergierten Feststoffes.

nicht dispergierbarer Anteil in % = (g Rückstand x 100 / Einwaage Tonerde g )

dispergierter Anteil D in % = 100 - nicht dispergierter Anteil in %

Beispiel 1 (Verbindung 1):

In einem 1000 ml Dreihalskolben wurden 136,4 g 14,25 Gew.% Siliciumtetraethanolat vorgelegt und auf 90°C erhitzt. Es wurden 11,8 g einer 1 %igen Salpetersäure zugegeben. Es entstand ein leichter Niederschlag. Man rührte 1 h. Danach erfolgt die Zugabe von 400 g Aluminiumtrishexanolat (6,3 Gew,%). Zur Hydrolyse wurde diese Mischung in drei Schritten in eine Vorlage aus 686 g Wasser bei 90 °C gegeben. Die Hydrolysedauer betrug 1 h. Innerhalb dieser Zeit, nach 40 min. gab man zur besseren Phasentrennung 8,4 g einer 25 %igen Ammoniaklösung hinzu. Der überstehende Alkohol wurde abdekantiert, die verbleibende wäßrige Phase durch Wasserdampfdestillation von Alkoholresten befreit. Die Trocknung erfolgte durch Sprühtrocknung.

Beispiel 2 (Verbindung 2):

In einem 1000 ml Dreihalskolben wurden 212 g 14,25 Gew.% Siliciumtetraethanolat vorgelegt und auf 90 °C erhitzt. Es wurden 18,4 g 1 %ige Salpetersäure zugeben. Es entstand ein leichter Niederschlag. Man rührte 1 h. Danach erfolgte die Zugabe von 400 g Aluminiumtrishexanolat (6 Gew.%). Zur Hydrolyse wurde diese Mischung in drei Schritten in eine Vorlage aus 778 g Wasser bei 90 °C gegeben. Die Hydrolysedauer betrug 1h. Nach 40 min. gab man zur besseren Phasentrennung 9,6 g einer 25 %-igen Ammoniaklösung hinzu. Der überstehende Alkohol wurde abdekantiert, die verbleibende wäßrige Phase durch Wasserdampfdestillation von Alkoholresten befreit. Die Trocknung erfolgte durch Sprühtrocknung.

Beispiel 3 (Verbindung 3):

In einem 1000 ml Dreihalskolben wurden 179 g 14,25 Gew.% Siliciumtetraethanolat vorgelegt und auf 90 °C erhitzt. Es wurden 15,5 g 1 %-ige Salpetersäure hinzugegeben. Es entstand ein leichter Niederschlag. Man rührte 1 h. Danach erfolgte die Zugabe von 500 g Aluminiumtrishexanolat (6,3 Gew.%). Zur Hydrolyse gab man diese Mischung in drei Schritten in eine Vorlage aus 883 g Wasser bei 90 °C. Die Hydrolysedauer betrug 1 h. Nach Zugabe von 8,5 g $HNO_3$ (65 Gew%) wurde 16 h bei 95°C gealtert. Der überstehende Alkohol wurde abdekantiert, die verbleibende wäßrige Phase durch Wasserdampfdestillation von Alkoholresten befreit. Die Trocknung erfolgte durch Sprühtrocknung.

Beispiel 4 (Verbindung 4):

In einem 1000 ml Dreihalskolben wurden 318 g 14,25 Gew.% Siliciumtetraethanolat vorgelegt und auf 90 °C erhitzt. Es wurden 27,5 g 1 %ige Salpetersäure zugeben. Es entstand ein leichter Niederschlag. Man rührte 1 h. Danach erfolgte die Zugabe von 400 g Aluminiumtrishexanolat (6,3 Gew.%.). Zur Hydrolyse gab man diese Mischung in drei Schritten in eine Vorlage aus 870 g Wasser bei 90 °C. Die Hydrolysedauer betrug 1 h. Nach 40 min. gab man zur besseren Phasentrennung 11 g einer 25 %-igen Ammoniaklösung hinzu. Der überstehende Alkohol wurde abdekantiert, die verbleibende wäßrige Phase wurde durch Wasserdampfdestillation von Alkoholresten befreit. Die Trocknung erfolgte durch Sprühtrocknung.

Beispiel 5 (Verbindung 5):

In einem 1000 ml Dreihalskolben wurden 550 g Aluminiumtrisbutylenglykolat (Al-Gehalt 5,6 Gew.%) mit 21,4 g 14,25 Gew.% Siliciumtetraethanolat gemischt. Diese Mischung wurde in drei Schritten zu einer Vorlage bestehend aus 735 g Wasser und 6,2 g $HNO_3$ (65 Gew.%) gegeben hydrolysiert, die Temperatur der Vorlage betrug 75°C. Die gesamte Hydrolysedauer betrugt 1 h. Nach erfolgter Phasentrennung wurde die überstehende organische Phase abdekantiert. Man erhitzte die wäßrige Phase auf 95 °C und hielt die Temperatur über 16 h. In der wäßrigen Phase befindlicher Alkohol wurde durch Wasserdampfdestillation entfernt. Die Trocknung erfolgte mittels Sprühtrocknung.

Beispiel 6 (Verbindung 6):

In einem 1000 ml Dreihalskolben wurden 200 g Aluminiumtrisethylglykolat (Al-Gehalt 6,8 Gew.%) und 38,6 g Ethylglykol mit 38,6g 28,5 Gew.% Siliciumtetraethanolat gemischt. Diese Mischung wurde in drei Schritten zu einer Vorlage bestehend aus 360 g Wasser gegeben und hydrolysiert, die Temperatur der Vorlage betrug 30 °C. Die gesamte Hydrolysedauer betrug 1,5 h. Anschließend werden 4,4 g 25 %-ige Ammoniaklösung zugegeben. Nach erfolgter Phasentrennung wurde die überstehende organische Phase abdekantiert. In der wäßrigen Phase befindlicher Alkohol wurde durch Wasserdampfdestillation entfernt. Die Trocknung erfolgte mittels Sprühtrocknung.

Beispiel 7 (Vergleichsbeispiel, Verbindung C):

In einem 2000 ml Dreihalskolben wurden 638 g wäßrige Kieselsäure vorgelegt und auf 75°C erhitzt. Man gab insgesamt 500 g Aluminiumtrishexanolat (Al-Gehalt = 6,35 wt.%) in drei Schritten mit je 15 min. Zeitunterschied zu der Mischung und ließ 30 min. rühren. Man dekantierte den Alkohol ab und verdünnte auf 5% Feststoffgehalt. Man erhitzte auf 95°C und hielt die Temperatur über 5h. Die verbleibende wäßrige Phase wurde durch Wasserdampfdestillation von Alkoholresten befreit. Die Trocknung erfolgte durch Sprühtrocknung.

**Patentansprüche**

1. Verfahren zur Herstellung von Alumosilikaten und Dispergieren der Alumosilikate in wässrigen und/oder in wässrig-sauren Medien, **dadurch gekennzeichnet, dass** man

   (A) eine oder mehrere hydrolysierbare Aluminiumverbindung(en) und
   (B) eine oder mehrere hydrolysierbare Organo-Siliciumverbindung(en), wobei

   (a) das Verhältnis der eingesetzten Aluminiumverbindungen zu den Organo-Siliciumverbindungen 99,5 Gew% zu 0,5 Gew% bis 50 Gew% zu 50 Gew%, jeweils bezogen auf $Al_2O_3$ und $SiO_2$ ,beträgt,
   (b) gemeinsam oder zeitlich bzw. räumlich voneinander getrennt bei 50°C bis 98°C hydrolisiert und
   (c) während oder nach der Hydrolyse die Umsetzungsprodukte gemeinsam einer hydrothermalen Alterung in wäßrig-saurer Umgebung bei Temperaturen von 40 bis 220 °C über einen Zeitraum von größer 0,5 h unterzieht.

   (C) die erhaltenen Alumosilikate trocknet und in Pulverform konfektioniert und
   (D) in wässrigen und/oder in wässrig-sauren Medien ohne Zusatz von oder Behandlung mit organischen Lösungsmitteln zu größer 90 Gew.% dispergiert.

2. Verfahren nach Anspruch 1, **dadurch gekennzeichnet, dass** man als hydrolysierbare Verbindungen des Anspruchs 1 Verbindungen des Typs

$$M(O\text{-}R\text{-}A\text{-}R')_{z-n} \, (O\text{-}R'')_n$$

   einsetzt, wobei ieweils unabhängig voneinander

   M      Aluminium oder Silizium ist,
   R"     ein Kohlenwasserstoffrest mit 1 bis 30 Kohlenstoffatomen ist,
   R'     ein Kohlenwasserstoffrest mit 1 bis 10 Kohlenstoffatomen ist,
   R      ein zweiwertiger Kohlenwasserstoffrest mit 1 bis 10 Kohlenstoffatomen ist und
   A      für ein Heteroatom aus der Hauptgruppe 6 (Sauerstoff-Gruppe) oder Haupt-gruppe 5 (Stickstoff-Gruppe) des Periodensystems, bevorzugt für Sauerstoff oder Stickstoff selbst steht, wobei wenn A für ein Element der Hauptgruppe 5 steht, A zur Absättigung seiner Valenzen als weitere Substituenten Wasserstoff, oder einen C1- bis C10- Alkyl- oder einen C6- bis C10- Aryl-/Alkylarylrest trägt, und
   n      ein Index für die Zahlen 0, 1, 2 oder 3 ist, wenn M Aluminium ist, oder ein Index für die Zahlen 0, 1, 2, 3 oder 4 ist, wenn M Silicium ist, und
   z      ein Index für die Zahl 3 ist, wenn M Aluminium ist, oder ein Index für die Zahl 4 ist, wenn M Silicium ist.

3. Verfahren nach Anspruch 2, **dadurch gekennzeichnet, dass** n gleich 0 ist.

4. Verfahren nach Anspruch 2, **dadurch gekennzeichnet, dass** n gleich 3 ist, wenn M Aluminium ist und/oder n gleich 4 ist, wenn M Silicium ist.

5. Verfahren nach einem der Ansprüche 1, 2 oder 4, dadurch gekennzeichn e t, dass man als hydrolysierbare Siliciumverbindungen Siliciumalkoholate mit C1- bis C8- Kohlenwasserstoffresten, bevorzugt mit gesättigten C2- bis C4- Kohlenwasserstoffresten einsetzt.

6. Verfahren nach einem der vorhergehenden Ansprüche, **dadurch gekennzeichnet, dass** man die hydrolysierbaren Siliciumverbindungen mit Wasser oder mit verdünnter Säure und zwar einer unterstöchiometrischen Menge von 0,5 bis 3 Mol, bevorzugt 1 bis 2 Mol, Wasser pro Mol Silicium vor Zugabe der hydrolysierbaren Aluminiumverbindung vorhydrolysiert.

7.  Verfahren nach einem der vorhergehenden Ansprüche, **dadurch gekennzeichnet, dass** man als hydrolysierbare Aluminiumverbindungen Aluminiumalkoholate mit C2- bis C12-, bevorzugt C4- bis C8-, besonders bevorzugt gesättigte C6- bis C8- Kohlenwasserstoffresten einsetzt.

8.  Verfahren nach einem der vorhergehenden Ansprüche, **dadurch gekennzeichnet, dass** man bei 85 bis 98°C hydrolisiert.

9.  Verfahren nach Anspruch 8, **dadurch gekennzeichnet, dass** die hydrothermale Alterung über einen Zeitraum von 1 h bis 20 h, durchgeführt wird.

10. Verfahren nach einem der Ansprüche 8 oder 9, **dadurch gekennzeichnet, dass** die hydrothermale Alterung bei 80 bis 130 °C durchgeführt wird.

11. Verfahren nach einem der vorhergehenden Ansprüche, **dadurch gekennzeichnet, dass** die Säure erst nach der Hydrolyse und vor der hydrothermalen Behandlung zugegeben wird.

12. Verfahren nach einem der vorhergehenden Ansprüche, **dadurch gekennzeichnet, dass** die während oder nach der Hydrolyse anwesende Säure eine einwertige organische C1- bis C6- Säure oder eine einwertige Mineralsäure ist.

13. Verfahren nach einem der vorhergehenden Ansprüche, **dadurch gekennzeichnet, dass** die hydrolysierbaren Metallverbindungen zuvor durch Destillation, Filtration oder Zentrifugation gereinigt wurden und/oder durch Ionenaustausch von Metallionen befreit wurden.

**Claims**

1.  A process for the manufacture of alumino-silicates and dispersing of the alumino-silicates in aqueous and/or aqueous-acidic media, **characterised in that**

    (A) one or more hydrolyzable aluminium compound(s) and

    (B) one or more hydrolyzable organosilicon compound(s), wherein

        (a) the aluminium compound / silicon compound ratio is from 99.5 wt.% : 0.5 wt.% to 50 wt.% : 50 wt.%, each referring to $Al_2O_3$ : $SiO_2$

        (b) are hydrolyzed jointly or discontinuously in space or time at 50 to 98 °C

        (c) during or after the hydrolysis the reaction products are jointly subjected to hydrothermal ageing in an aqueous-acidic environment at temperatures of 40 to 220 °C for a period of greater than 0.5 hour

    (C) the obtained alumino-silicates are dried and ready-made in powder form, and

    (D) dispersed in aqueous and/or aqueous-acidic media to greater 90 % by weight without the addition of or treatment with organic solvents.

2.  A process according to claim 1, **characterised in that** the hydrolyzable compounds of claim 1 are compounds of the type $M(O-R-A-R')_{z-n}$ $(O-R'')_n$, wherein independent from each other

    M       is aluminium or silicon,

    R"      is a hydrocarbon residue having 1 to 30 carbon atoms,

    R'      is a hydrocarbon residue having 1 to 10 carbon atoms,

    R       is a bivalent hydrocarbon residue having 1 to 10 carbon atoms, and

**EP 0 931 017 B1**

A   represents a heteroatom of the main group 6 (oxygen group) or main group 5 (nitrogen group) of the periodic system, preferably oxygen or nitrogen, wherein, if A represents an element of the main group 5, A bears hydrogen or a $C_1$ to $C_{10}$ alkyl residue or a $C_6$ to $C_{10}$ aryl- /alkyl aryl residue as additional substituent(s) for the saturation of its valences, and

n   is an index for the numbers 0, 1, 2, or 3 if M is aluminium, or is an index for the numbers 0, 1, 2, 3, or 4 if M is silicon, and

z   is an index for the number 3 if M is aluminium, or is an index for the number 4 if M is silicon.

3.  A process according to claim 2, **characterised in that** n is equal to 0.

4.  A process according to claim 2, **characterised in that** n is equal to 3 if M is aluminium and/or n is equal to 4, if M is silicon.

5.  A process according to any one of claims 1, 2, or 4, **characterised in that** silicon alcoholates having $C_1$ to $C_8$ hydrocarbon residues, preferably saturated $C_2$ to $C_4$ hydrocarbon residues, are used as hydrolyzable silicon compounds.

6.  A process according to any one of the preceding claims, **characterised in that**, prior to addition of the hydrolyzable aluminium compound, the hydrolyzable silicon compounds are prehydrolyzed with water or dilute acid using 0.5 to 3 moles of water, preferably 1 to 2 moles, per mole of silicon, i.e. less than the stoichiometric amount.

7.  A process according to any one of the preceding claims, **characterised in that** aluminium alcoholates having $C_2$ to $C_{12}$, preferably $C_4$ to $C_8$, most preferably saturated $C_6$ to $C_8$ hydrocarbon residues are used as hydrolyzable aluminium compounds.

8.  A process according to any one of the preceding claims, **characterised in that** the hydrolysis is performed at 85 to 98 °C.

9.  A process according to claim 8, **characterised in that** the hydrothermal ageing is conducted for a period of 1 to 20 hours.

10. A process according to any one of the claims 8 or 9, **characterised in that** the hydrothermal ageing is conducted at 80 to 130 ° C.

11. A process according to any one of the preceding claims, **characterised in that** the acid is added after the hydrolysis, but prior to hydrothermal treatment.

12. A process according to any one of the preceding claims, **characterised in that** the acid which is present during or after the hydrolysis is a monovalent organic $C_1$ to $C_6$ acid or a monovalent mineral acid.

13. A process according to any one of the preceding claims, **characterised in that** the hydrolysable metal compounds were previously purified by distillation, filtration, or centrifugation and/or are liberated from metal ions by ion exchange.

**Revendications**

1.  Procédé de préparation d'alumosilicates et de dispersion des alumosilicates dans des milieux aqueux et/ou aqueux-acides, **caractérisé en ce que** l'on hydrolyse

    (A) un ou plusieurs composés d'aluminium hydrolysables et

    (B) un ou plusieurs composés organiques de silicium hydrolysables,

        (a) le rapport des composés d'aluminium utilisés aux composés organiques de silicium allant de 99,5 % en poids à 0,5 % en poids jusqu'à 50 % en poids à 50 % en poids, respectivement par rapport à l'$Al_2O_3$

et au SiO$_2$,

(b) ensemble ou séparément l'un de l'autre dans le temps ou dans l'espace entre 50 °C et 98 °C et

(c) que, pendant ou après l'hydrolyse, on soumet les produits de la conversion ensemble à un vieillissement hydrothermique dans un environnement aqueux-acide à des températures allant de 40 à 220 °C pendant une durée supérieure à 0,5 h,

(C) que l'on sèche et transpose sous forme pulvérulente les alumosilicates obtenus et

(D) que l'on disperse dans des milieux aqueux et/ou aqueux-acides sans ajout ou traitement avec des solvants organiques à plus de 90 % en poids.

2. Procédé selon la revendication 1, **caractérisé en ce que** l'on met en oeuvre comme composés hydrolysables de la revendication 1 des composés du type

$$M(O\text{-}R\text{-}A\text{-}R')_{z-n}(O\text{-}R'')_n,$$

où, respectivement indépendamment les uns des autres,

M      est de l'aluminium ou du silicium,
R''     est un radical d'hydrocarbure comportant 1 à 30 atomes de carbone,
R'      est un radical d'hydrocarbure comportant 1 à 10 atomes de carbone,
R      est un radical d'hydrocarbure bivalent comportant 1 à 10 atomes de carbone et
A      est un hétéroatome du groupe principal 6 (groupe oxygène) ou du groupe principal 5 (groupe azote) de la table périodique, de préférence de l'oxygène où de l'azote lui-même et, si A représente un élément du groupe principal 5, A comportant pour la saturation de ses valences comme autres substituants de l'hydrogène, ou un radical d'alkyle C1 à C10 ou d'aryle/alkyle C6 à C10 et
n      est un indice pour les nombres 0, 1, 2 ou 3 si M est de l'aluminium, ou un indice pour les nombres 0, 1, 2, 3 ou 4 si M est du silicium,
z      est un indice pour le nombre 3 si M est de l'aluminium, ou un indice pour le nombre 4 si M est du silicium.

3. Procédé selon la revendication 2, **caractérisé en ce que** n est égal à 0.

4. Procédé selon la revendication 2, **caractérisé en ce que** n est égal à 3 si M est de l'aluminium et/ou n est égal à 4 si M est du silicium.

5. Procédé selon une des revendications 1, 2 ou 4, **caractérisé en ce qu'**on utilise comme composés de silicium hydrolysables des alcoolates de silicium comportant des radicaux d'hydrocarbure C1 à C8, de préférence des radicaux d'hydrocarbure saturés C2 à C4.

6. Procédé selon une des revendications précédentes, **caractérisé en ce qu'**on pré-hydrolyse les composés de silicium hydrolysables avec de l'eau ou avec de l'acide dilué et à savoir une quantité sous-stoechiométrique de 0,5 à 3 moles, de préférence 1 à 2 moles d'eau par mole de silicium avant l'ajout du composé d'aluminium hydrolysable.

7. Procédé selon une des revendications précédentes, **caractérisé en ce qu'**on utilise comme composés d'aluminium hydrolysables des alcoolates d'aluminium comportant des radicaux d'hydrocarbure saturés C2 à C12, de, de préférence C4 à C8, de manière particulièrement préférentielle C6 à C8.

8. Procédé selon une des revendications précédentes, **caractérisé en ce qu'**on hydrolyse entre 85 et 98 °C.

9. Procédé selon la revendication 8, **caractérisé en ce que** le vieillissement hydrothermique est réalisé sur une durée de 1 h à 20 h.

10. Procédé selon une des revendications 8 ou 9, **caractérisé en ce que** le vieillissement hydrothermique. est réalisé entre 80 et 130 °C.

**11.** Procédé selon une des revendications précédentes, **caractérisé en ce que** l'acide n'est ajouté qu'après l'hydrolyse et avant le traitement hydrothermique.

**12.** Procédé selon une des revendications précédentes, **caractérisé en ce que** l'acide présent pendant ou après l'hydrolyse est un acide minéral organique univalent C1 à C6 ou un acide minéral univalent.

**13.** Procédé selon une des revendications précédentes, **caractérisé en ce que** les composés métalliques hydrolysables ont été préalablement nettoyés par distillation, filtration ou centrifugation et/ou débarrassés par échange ionique des ions métalliques.